# EUROPEAN PATENT SPECIFICATION

(11) **EP 2 576 286 B1**
(45) Date of publication and mention of the grant of the patent: **18.02.2015**
(21) Application number: 10725513.5
(22) Date of filing: 03.06.2010
(51) Int. Cl.: B60P 1/28

(54) **DUMP TRUCK**
MULDENKIPPER
CAMION-BENNE

(43) Date of publication of application: 10.04.2013
(73) Proprietor: Hitachi Construction Machinery Co., Ltd., Bunkyo-ku Tokyo 112-8563 (JP)
(72) Inventor: KITAGUCHI, Atsushi, Tsuchiura-shi Ibaraki 300-0013 (JP); SATOU, Takayuki, Tsuchiura-shi Ibaraki 300-0013 (JP); ISHIHARA, Kazunori, Tsuchiura-shi Ibaraki 300-0013 (JP); KITA, Yasuki, Tsuchiura-shi Ibaraki (JP); IKEMA, Takehito, Tsuchiura-shi Ibaraki 300-0013 (JP); YASUDA, Tomohiko, Tsuchiura-shi Ibaraki 300-0013 (JP); SASAKI, Takashi, Tsuchiura-shi Ishikawa 300-0013 (JP); NABESHIMA, Yoshifumi, Tsuchiura-shi Ibaraki (JP); OOSHIMA, Hitomi, Tsuchiura-shi Ibaraki 300-0013 (JP)
(74) Representative: Jansen, Cornelis Marinus
(86) International application number: PCT/JP2010/003703
(87) International publication number: WO 2011/151862

(56) References cited:
- WO-A1-2009/046488
- WO-A1-2010/020925
- US-A1- 2005 253 418
- US-A1- 2006 080 818
- US-A1- 2008 067 856

## Description

### Technical Field

This invention relates to a dump truck provided with a tiltable body, which is mounted on a frame and which has a payload section for loading therein an object to be hauled, said payload section including a pair of side walls, and a canopy arranged in conjunction with the payload section and over an operator's cab.

### Background Art

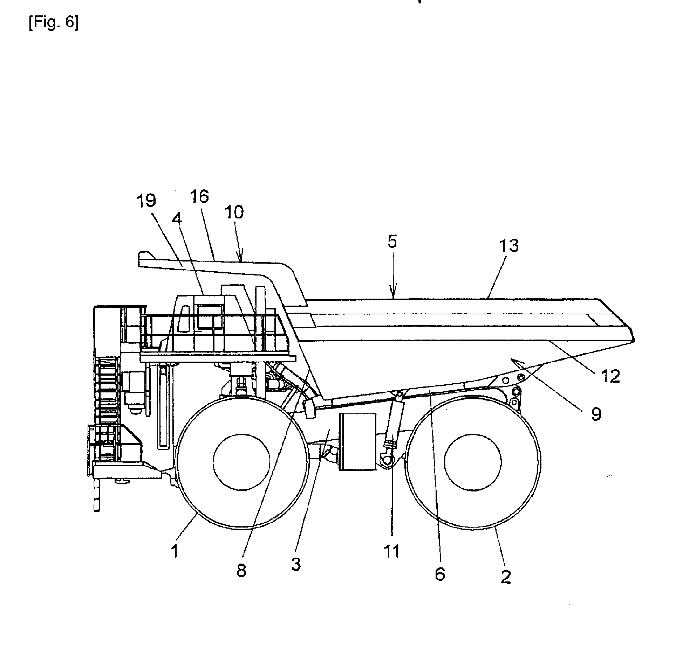

FIG. 6 is a side view illustrating a conventional dump truck. This dump truck is provided with a pair of left and right front wheels 1, a pair of left and right rear wheels 2, and a frame 3 on which these front wheels 1 and rear wheels 2 are mounted. An operator's cab 4 is arranged on the frame 3 at a front position thereof, and a body 5 is arranged on the frame 3 at a position rearward of the operator's cab 4. This body 5 is provided with a payload section for loading therein an object to be hauled and also with a canopy 10. The payload section is defined by an unillustrated bottom wall arranged on a body frame 6, a front wall 8 connected to the bottom wall and a pair of side walls 9 connected to these bottom wall and front wall 8. The canopy 10 is connected to the front wall 8 of the payload section, and is arranged over the operator's cab 4 such that the canopy 10 covers the operator's cab 4. Around the body 5, plural stiffeners are disposed such that the stiffeners are arranged on outer sides of the unillustrated bottom wall, front wall 8 and paired side walls 9 to reinforce the corresponding walls. As illustrated in FIG. 6, for example, horizontally-extending stiffeners 12,13 are arranged on the outer side of each of the side walls 9. The stiffener 13 is arranged on an outer side of a top part of each of the side walls 9 of the body 5. As the body 5 is restricted in the capacity of the payload section in relation to its authorized payload weight, a height position of the stiffener 13 is set lower than a height position of an upper surface 16 of the canopy 10. Further, a pair of left and right hydraulic cylinders 11 is arranged, with upper ends being connected to the body 5 and lower ends being connected to the frame 3 to raise or lower the body 5.

Loading of an object, which is to be hauled, onto the body 5 is performed by a loading machine, for example, a hydraulic excavator. Described specifically, a great deal of an object to be hauled is loaded by a bucket of a hydraulic excavator into the payload section of the body 5. In general, the object to be hauled is loaded in a heap beyond a top part of the payload section. Upon loading the object to be hauled or during its haul travel, the object held in the payload section for its haulage may collapse and may spill all around. The above-described canopy 10 protects the operator's cab 4 and the like such that, even if such payload spillage takes place, the operator's cab 4 and the like would not be covered under the object.

It is to be noted that upon an acceleration in the course of haul travel, the payload may generally spill rearwards because a rearward acceleration is applied. Upon loading into the payload section of the body 5 an object to be hauled, there is, accordingly, a tendency to load the object to a forward position in the payload section of the body 5 with a view to reducing such rearward payload spillage. However, the loading of the object to the forward position in the payload section as mentioned above actually tends to induce payload spillage from the side of both side walls 9. A dump truck corresponding to the conventional technology illustrated in FIG. 6 is disclosed, for example, in Patent Document 1.

Where an object to be hauled is a low-density object, an authorized payload weight would not be reached even if the object is loaded in a heap in a payload section of a body. In recent years, there has hence been a desire for providing a dump truck, which is adapted to haul such a low-density object, with a large-capacity body. To increase the authorized payload weight in response to this desire, there have conventionally been proposed dump trucks each provided with a large-capacity body in which a top part of each of both side walls is extended upwards to a same height position as a top part of a front wall while extending horizontally.

### Citation List

### Patent Literature

Patent Document 1: US-A-2004/0036245
Patent Document 2: WO2009/046488 discloses a truck body including a bottom floor, a headboard and two side walls together defining a volume for carrying a load with an opening opposite the headboard for emptying the load, the bottom floor having a rear section adjacent the opening, the rear section including an arcuate floor portion adapted to eject the load laterally from the truck body when the truck body is raised.

### Disclosure of Invention

### Technical Problem

In the above-described conventional technology illustrated in FIG. 6 or the conventional technology disclosed in Patent Document 1, the position of each of the top parts of both side walls 9 of the body 5 is set lower than the position of the top part of the front wall 8, namely, the position of a connection between the canopy 10 and the front wall 8. These conventional technologies, therefore, involve a potential problem that payload spillage may take place from the side of both side walls 9 as described above. With a conventional dump truck having a large-capacity body in which both side walls are each extended upwards to a same height position as the top part of a front wall while extending horizontally, the authorized payload volume can be increased so that such payload spillage from the parts of both side walls can be avoided. However, both side walls have an increased weight as a result of the construction of the body with the large capacity. This increased weight leads to a decrease in the authorized payload weight, thereby developing another problem in that the efficiency of haulage tends to lower. In the conventional dump truck having the large-capacity body, the height positions of the top parts of both side walls are high. During loading work of an object, which is to be hauled, by a loading machine such as a hydraulic excavator, it is thus necessary to frequently pay attention such that the loading machine can be kept avoiding interfering with both side walls of the body. The operation of the loading machine tends to be subjected to restrictions. Accordingly, there is also a problem that the efficiency of loading work tends to be lowered.

With the foregoing circumstances of the conventional technologies in view, the present invention has as an object thereof the provision of a dump truck capable of assuring a large authorized payload weight while inhibiting the spillage of an object under loading or haulage from the parts of side walls.

### Means for Solving the Problem

The present invention is defined in claim 1. To achieve the above object, the present invention provides a dump truck provided with a frame, an operator's cab arranged on the frame at a front position thereof, and a tiltable body arranged on the frame at a position rearward of the operator's cab, said body having a payload section defined by a bottom wall, a front wall and a pair of side walls for loading therein an object to be hauled, and a canopy connected to the front wall of the payload section and arranged over the operator's cab, wherein a front end portion of a top part of each of the paired side walls included in the payload section of the body is set at a same height position or a substantially same height position as the canopy, a rear end portion of the top part of each of the side walls is set at a height position lower than the front end portion, and the top part of each of the paired side walls is formed in a configuration including a rearwardly-declining oblique profile.

According to the present invention constructed as described above, the top part of each of the paired side walls forming the payload section mounted on the body is formed in the configuration including the rearwardly-declining oblique profile, but the front end portion of the top part of each of the side walls is set at the same height position or substantially the same height position as the canopy. The side walls are, therefore, each provided with a relatively large height dimension at a part thereof located at a forward position in the payload section on the side of the canopy. Upon loading the object into the payload section, the object tends to be loaded to the forward position in the payload section as mentioned above. As the height dimension of the part of each side wall, said part being located at the forward position in the payload section, is relatively large in the present invention, it is possible to inhibit the object from spilling from the parts of the side walls, said parts forming a forward part of the payload section, even when a great deal of the object is loaded to the forward position in the payload section.

The rear end portion of the top part of each of the side walls is set at the height position lower than the front end portion, and each of the side walls is formed in the configuration including the rearwardly-declining oblique profile. Therefore, the side walls can each be provided with a reduced weight compared with the case in which each side wall is extended upwards as a whole such that its top part becomes, for example, as high as the canopy while extending horizontally. As a consequence, the payload section can be assured to have a large authorized payload weight. Therefore, the present invention can assure a large authorized payload weight while assuring a relatively large authorized payload capacity and inhibiting the object from spilling from the parts of the side walls.

According to the present invention, the rear end portion of the top part of each of the side walls is set at the height position lower than the front end portion, and the side walls are each formed in the configuration including the rearwardly-declining oblique profile, as mentioned above. The height dimension is, therefore, lower around a rear end portion of each side wall. It is, therefore, possible to reduce the potential problem that a loading machine may interfere with each of the side walls upon performing loading work of the object by the loading machine, and to relax the restriction to the loading work by the loading machine.

The dump truck according to the present invention further comprises stiffeners arranged on outer sides of the respective top parts of the paired side walls, extending along and over entire ranges of the respective top parts in a direction of extending arrangement thereof, and reinforcing the corresponding side walls.

According to the present invention constructed as described above, the stiffeners are arranged on the outer sides of the respective top parts of the paired side walls such that the stiffeners extend along and over the entire ranges of the respective top parts in the direction of the extending arrangement thereof. The top parts of the side walls are, therefore, provided with enhanced rigidity. It is, accordingly, possible to prevent the occurrence of deformations which would otherwise take place on the side walls, including the top parts thereof, due to hitting of the object against the side walls upon loading the object into the payload section.

The dump truck according to the present invention further comprises stiffeners arranged on outer sides of respective side parts of the canopy and reinforcing the canopy, and the stiffeners for the respective side walls and the stiffeners arranged on the corresponding sides of the canopy may be connected to each other.

According to the present invention constructed as described above, the canopy is provided at both side parts thereof with enhanced rigidity owing to the arrangement of the stiffeners that reinforce both side parts of the canopy. The area of connection between the canopy and the front wall is also provided with enhanced rigidity because the stiffeners for the canopy and the stiffeners located on the corresponding side walls are connected together. As a consequence, stiffeners required to reinforce the area of connection between the canopy and the front wall can be made fewer.

In the dump truck according to the present invention, the top part of each of the side walls have a horizontal portion arranged extending in a horizontal direction at a same height position or a substantially same height position as an upper surface of the canopy, and an oblique portion arranged in conjunction with the horizontal portion and formed in a rearwardly-declining oblique profile; and the stiffeners for the respective side walls may be connected to the stiffeners arranged on the corresponding sides of the canopy, and may each be composed of a horizontal member arranged extending in a horizontal direction along the horizontal portion of the top part of the corresponding side wall and an oblique member connected to the horizontal member and formed in a rearwardly-declining oblique profile along the oblique portion of the top part of the corresponding side wall.

According to the present invention constructed as described above, the horizontal parts of the respective side walls, said horizontal parts being arranged on the side of the canopy, and the horizontal members of the stiffeners, said horizontal members reinforcing the corresponding horizontal parts, can further increase the authorized payload capacity at the forward position in the payload section, and therefore, can prevent spillage of the object from the parts of the side walls, said parts forming the forward part of the payload section.

In the dump truck according to the present invention, a position of the conjunction between the horizontal portion and oblique portion of each of the side walls and a position of the connection between the horizontal member and oblique member of the stiffener reinforcing the side wall is set at positions forward of a middle position of the payload section as viewed in a front-to-rear direction.

According to the present invention constructed as described above, the position of the conjunction between the horizontal portion and oblique portion of each of the side walls and the position of the connection between the horizontal member and oblique member of the stiffener reinforcing the side wall are set at the positions forward of the middle position of the payload section as viewed in the front-to-rear direction. The height position of each of the horizontal portions of the side walls, said horizontal portions being arranged in the forward part of the payload section, and the height position of each of the horizontal members of the stiffeners for the side walls are relatively high, so that upon performing loading work of the object into the payload section, a great deal of the object can be loaded into the forward part of the payload section. Further, the height position of each of the oblique portions of the side walls, said oblique portions being arranged in a rearward part of the payload section, and the height position of each of the oblique members of the stiffeners for the side walls can be set relatively low, so that the weight of each of the oblique parts of the side walls can be reduced and the interference between the rearward part of the payload section and the loading machine upon performing loading work by the loading machine can also be reduced. It is, therefore, possible to assure not only a large authorized payload capacity but also a large authorized payload weight and also to assure a good balance between the authorized payload capacity and the authorized payload weight by arranging the horizontal portion of each side wall and the horizontal member of each stiffener, which reinforces the side wall, on the side forward of the position of conjunction between the horizontal portion and the oblique portion and the position of connection between the horizontal member and the oblique member.

### Advantageous Effects of the Invention

According to the present invention, the front end portion of the top part of each of the paired side walls included in the payload section is set at the same height position or substantially the same height position as the canopy, the rear end portion of the top part of each of the side walls is set at the height position lower than the front end portion, and the top part of each of the paired side walls is formed in the configuration including the rearwardly-declining oblique profile. Therefore, the height dimension of each of the side walls can be set relatively high on the side of the canopy, thereby assuring a large authorized payload weight while inhibiting an object under loading or haulage from spilling from the parts of the side walls. As a consequence, traveling with the dump truck can achieve an improved efficiency of haulage compared with those available with conventional dump trucks. As described above, it is also possible to form each side wall in a configuration including an oblique profile, and therefore, to set the height dimension of the rear end portion of each side wall relatively low. The restriction to a loading operation by a loading machine at the time of loading work of an object, which is to be hauled, into the payload section can be relaxed compared with before. As a consequence, the efficiency of loading work can be improved compared with before.

### Brief Description of Drawings

[fig. 1] A side view illustrating a first example of the dump truck not forming part of the present invention.
[fig. 2] A front view of the dump truck according to the first example illustrated in FIG. 1.
[fig. 3] A side view showing a second example not forming part of the present invention.
[fig. 4] A side view illustrating a third embodiment of the present invention.
[fig. 5] A side view depicting a fourth embodiment of the present invention.
[fig. 6] A side view illustrating a conventional dump truck.

The embodiments of the dump truck according to the present invention will hereinafter be described with reference to the drawings.

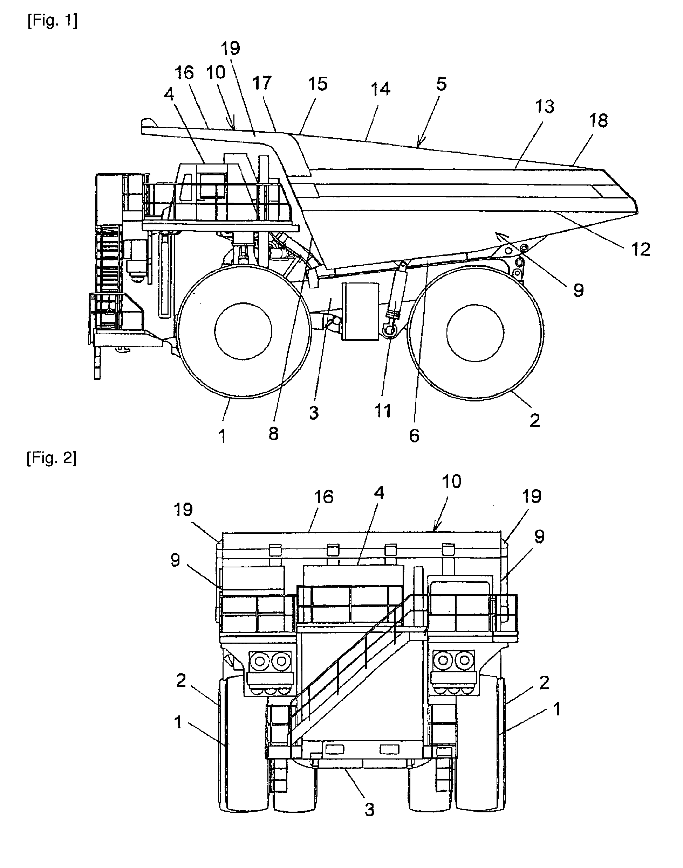

As shown in FIGS. 1 and 2, the dump truck according to the first example not forming part of the present invention is provided, similar to the above-described dump truck illustrated in FIG. 6, with a pair of left and right front wheels 1, a pair of left and right rear wheels 2, and a frame 3 on which these front wheels 1 and rear wheels 2 are mounted. An operator's cab 4 is arranged on the frame 3 at a front position thereof, and a body 5 is arranged on the frame 3 at a position rearward of the operator's cab 4. This body 5 is provided with a payload section for loading therein an object to be hauled, such as earth or stones, and also with a canopy 10. The payload section is defined by an unillustrated bottom wall arranged on a body frame 6, a front wall 8 connected to the bottom wall and a pair of side walls 9 connected to these bottom wall and front wall 8. The canopy 10 is connected to the front wall 8 of the payload section, and is arranged over the operator's cab 4 such that the canopy 10 covers the operator's cab 4. This canopy 10 is provided at both side parts thereof with stiffeners 19, respectively. Around the body 5, plural stiffeners are also disposed such that the stiffeners are arranged on outer sides of the unillustrated bottom wall, front wall 8 and paired side walls 9 to reinforce the corresponding walls. As illustrated in FIG. 1, for example, horizontally-extending stiffeners 12,13 are arranged on the outer side of each of the side walls 9. Further, a pair of left and right hydraulic cylinders 11 is arranged, with upper ends being connected to the body 5 and lower ends being connected to the frame 3 to raise or lower the body 5.

As illustrated in FIG. 1, a front end portion 15 of a top part 14 of each of the paired side walls 9 included in the payload section of the body 5 in the dump truck according to the first example is set at a same height position or substantially a same height position as the canopy 10 and has been welded to a rear end portion 17 of a top surface 16 of the canopy 10. Further, a rear end portion 18 of the top part 14 of each of the paired side walls 9 is set at a height position lower than the front end portion 15. Furthermore, the top part 14 of each of the side walls 9 is formed as a whole in an oblique configuration rearwardly declining from the front end portion 15 toward the rear end portion 18.

In the first example constructed as described above, the top parts 14 of the paired side walls 9 forming the payload section mounted on the body 5 are each formed as a whole in the rearwardly-declining oblique profile, but the front end portion 15 of the top part 14 of each of the side walls 9 is set at the same height position or substantially the same height position as the upper surface 16 of the canopy 10. Therefore, the height position of each side wall 9 is set relatively high at a part thereof located at a forward position in the payload section on the side of the canopy 10. Upon loading into the payload section an object to be hauled, the object tends to be loaded to the forward position in the payload section as mentioned above. As the height dimension of the part of each side wall 9, said part being located at the forward position in the payload section, is relatively large in the first example, it is possible to inhibit the object from spilling from the parts of the side walls 9, said parts forming a forward part of the payload section, even when a great deal of the object is loaded to the forward position in the payload section.

The rear end portion 18 of the top part 14 of each of the side walls 9 is set at the height position lower than the front end portion 15, and each of the side walls 9 is formed as a whole in the rearwardly-declining oblique profile. The payload section is, therefore, provided with a large authorized payload weight while reducing the weight of each of the side walls 9. According to the first example, a large authorized payload weight can, therefore, be assured while assuring a relatively large authorized payload capacity and inhibiting an object under loading or haulage from spilling from the parts of the side walls 9. Accordingly, an improved efficiency of haulage can be achieved by traveling with the dump truck according to the first embodiment.

As mentioned above, the rear end portion 18 of the top part 14 of each of the side walls 9 is set at the height position lower than the front end portion 15, and the side walls 9 are each formed as a whole in the rearwardly-declining oblique profile as mentioned above. The height dimension is hence decreased around the rear end portion 18 of each side wall 9. It is, therefore, possible to reduce the potential problem that a loading machine such as a hydraulic excavator may interfere with each of the side walls 9 upon performing loading work of the object by the loading machine, and to relax the restriction to the loading work by the loading machine. As a consequence, the efficiency of loading work can be improved.

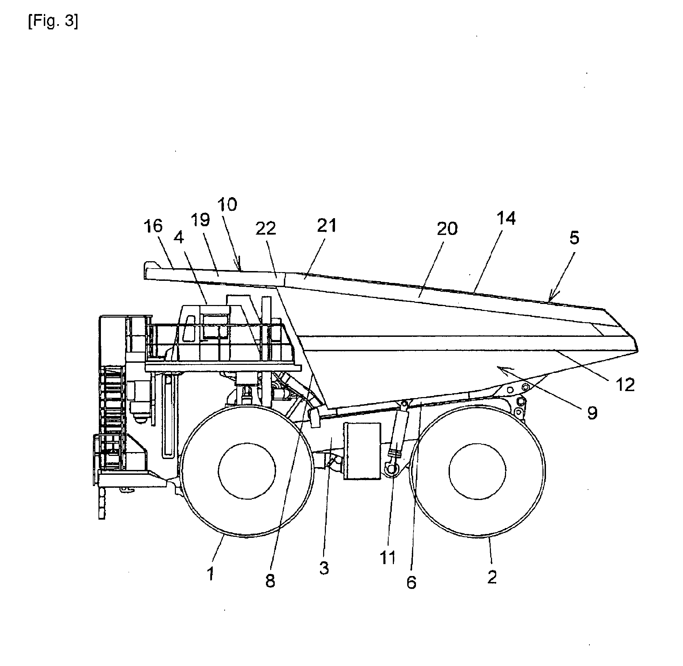

In a dump truck according to the second example shown in FIG. 3, stiffeners 20 are arranged on outer sides of the top parts 14 of the paired side walls 9, respectively. The stiffeners 20 extend along and over entire ranges of the respective top parts 14 in a direction of extending arrangement thereof, and reinforce the corresponding side walls 9. Each stiffener 20 is arranged as a whole in an oblique form conforming to an oblique form of the corresponding side wall 9. Further, this second example is constructed such that on respective outer sides of side portions of the canopy 10, rear end portions 22 of the stiffeners 19 of the canopy 10 and front end portions 21 of the stiffeners 20 located at the corresponding positions on the respective side walls 9 have been connected together by welding. The remaining construction is similar to that of the above-described first example.

According to the second example constructed as described above, similar advantageous effects as those available from the above-described first example can be obtained, and in addition, the top parts 14 of the respective side walls 9 are provided with enhanced rigidity owing to the arrangement of the stiffeners 20 on the outer sides of the top parts 14 of the respective side walls 9 such that the stiffeners 20 extend along and over the entire ranges of the respective side walls 9 in the direction of the extending arrangement thereof. It is, accordingly, possible to prevent the occurrence of deformations which would otherwise take place on the side walls 9, including the top parts 14 thereof, due to hitting of an object, which is to be hauled, against the side walls 9 upon loading the object into the payload section. As a consequence, the body 5 is provided with high reliability and rigidity.

Owing to the arrangement of the stiffeners 19 that reinforce both side parts of the canopy 10, the canopy 10 is provided at both side parts thereof with enhanced rigidity, thereby contributing to providing the body 5 with high reliability. Because the stiffeners 19 for the canopy 10 and the stiffeners 20 located on the corresponding side walls 9 are connected together, the area of connection between the canopy 10 and the front wall 8 is provided with enhanced rigidity. As a consequence, stiffeners required to reinforce the area of connection between the canopy 10 and the front wall 8 can be made fewer, thereby contributing to a reduction in the weight of the body 5.

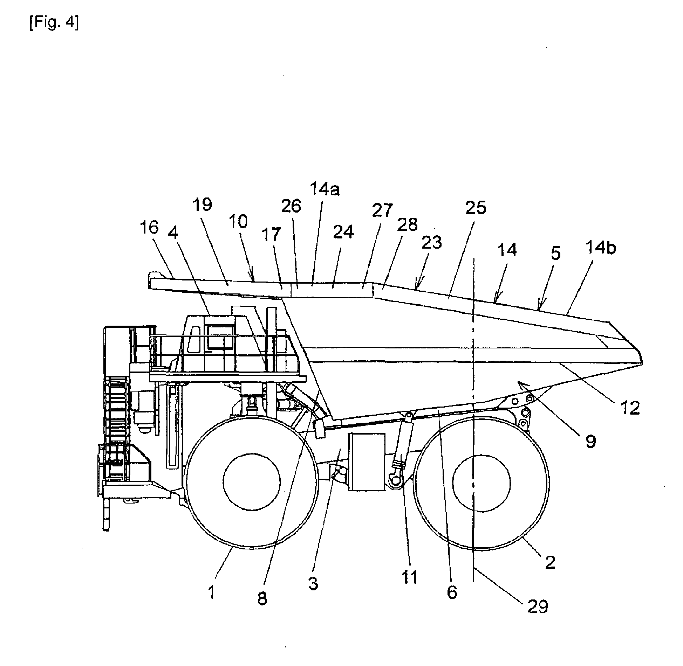

In the third embodiment depicted in FIG. 4, the top part 14 of each of the side walls 9 has a horizontal portion 14a and an oblique portion 14b. The horizontal portion 14a is arranged extending in a horizontal direction at a same height position or a substantially same height position as the upper surface 16 of the canopy 10, for example, at a position forward of a middle position 29 of the payload section as viewed in the front-to-rear direction and to a substantially middle part between the front end part of the payload section and the middle position 29, while the oblique portion 14b is arranged in conjunction with the horizontal portion 14a and is formed in a rearwardly-declining oblique profile. Stiffeners 23 for the respective side walls 9 have been connected by welding at front end portions 26 thereof to the rear end portions 17 of the corresponding stiffeners 19 reinforcing both side parts of the canopy 10. The stiffeners 23 are each composed of a horizontal member 24 and an oblique member 25. The horizontal member 24 is arranged extending in a horizontal direction along the horizontal portion 14a of the top part 14 of the corresponding side wall 9, while the oblique member 25 has been connected by welding at a front end portion 28 thereof to a rear end portion 27 of the horizontal member 24 and is formed in a rearwardly-declining oblique profile along the oblique portion 14b of the top part 14 of the corresponding side wall 9. The remaining construction is similar to that of the above-described second example.

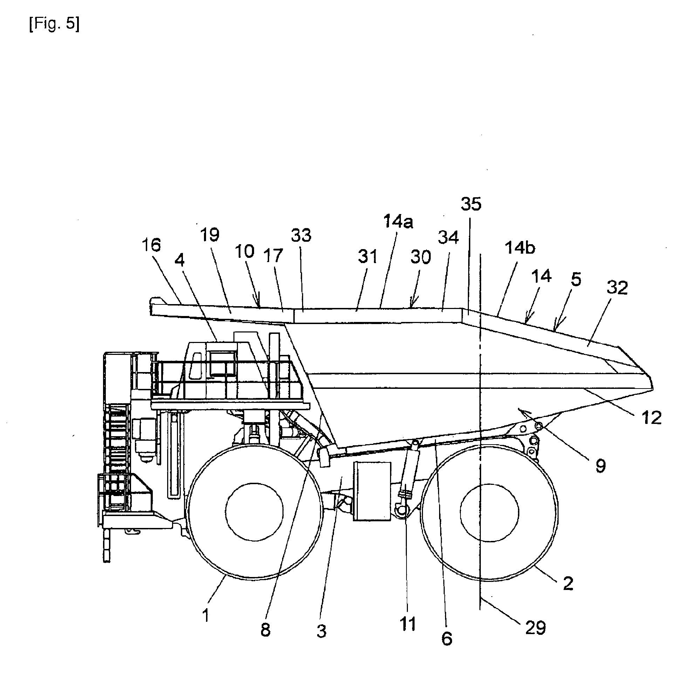

In the fourth embodiment illustrated in FIG. 5, the top part 14 of each of the side walls 9 has a horizontal portion 14a and an oblique portion 14b as in the third embodiment. The horizontal portion 14a is arranged extending in a horizontal direction at a same height position or a substantially same height position as the upper surface 16 of the canopy 10, for example, to around the middle position 29 of the pay load section as viewed in the front-to-rear direction, while the oblique portion 14b is arranged in conjunction with the horizontal portion 14a and is formed in a rearwardly-declining oblique profile. Stiffeners 30 for the respective side walls 9 have been connected by welding at front end portions 33 thereof to the rear end portions 17 of the corresponding stiffeners 19 reinforcing both side parts of the canopy 10. The stiffeners 30 are each composed of a horizontal member 31 and an oblique member 32. The horizontal member 31 is arranged extending in a horizontal direction along the horizontal portion 14a of the top part 14 of the corresponding side wall 9, while the oblique member 32 has been connected by welding at a front end portion 35 thereof to a rear end portion 34 of the horizontal member 31 and is formed in a rearwardly-declining oblique profile along the oblique portion 14b of the top part 14 of the corresponding side wall 9. The remaining construction is similar to that of the above-described second example.

According to each of these third and fourth embodiments, similar advantageous effects as those available from the above-described second example can be obtained. In addition, the position of the conjunction between the horizontal portion 14a and oblique portion 14b of each of the side walls 9 and the position of the connection between the horizontal member 24 or 31 and oblique member 25 or 32 of the stiffener 23 or 30 reinforcing the side wall 9 are set at the positions forward of the middle position 29 of the payload section as viewed in the front-to-rear direction. The height position of each of the horizontal portions 14a of the side walls 9, said horizontal portions 14a being arranged in the forward part of the payload section, and the height position of each of the horizontal members 24 or 31 of the stiffeners 23 or 30 for the side walls 9 are relatively high, so that upon performing loading work of an object, which is to be hauled, into the payload section, a great deal of the object can be loaded into the forward part of the payload section while inhibiting the occurrence of payload spillage. Further, the height position of each of the oblique portions 14b of the side walls 9, said oblique portions 14b being arranged in a rearward part of the payload section, and the height position of each of the oblique members 25 or 32 of the stiffeners 23 or 30 for the side walls 9 can be set relatively low, so that the weight of each of the oblique parts 14b of the side walls 9 is reduced and the interference between the rearward part of the payload section and the loading machine upon performing loading work by the loading machine can also be reduced. In other words, by arranging the horizontal portion 14a of each side wall 9 and the horizontal member 24 or 31 of each stiffener 23 or 30, which reinforces the side wall 9, on the side forward of the position of conjunction between the horizontal portion 14a and the oblique portion 14b and the position of connection between the horizontal member 24 or 31 and the oblique member 25 or 32, it is possible to assure not only a large authorized payload capacity but also a large authorized payload weight. As a consequence, a good balance can be assured between the authorized payload capacity and the authorized payload weight.

### Legend

- 5: Body
- 9: Side walls
- 10: Canopy
- 14: Top parts
- 14a: Horizontal portions
- 14b: Oblique portions
- 15: Front end portions
- 16: Upper surface
- 17: Rear end portion
- 18: Rear end portions
- 19: Stiffeners
- 20: Stiffeners
- 21: Front end portions
- 22: Rear end portion
- 23: Stiffeners
- 24: Horizontal members
- 25: Oblique members
- 26: Front end portions
- 27: Rear end portions
- 28: Front end portions
- 29: Middle position
- 30: Stiffeners
- 31: Horizontal members
- 32: Oblique members
- 33: Front end portions
- 34: Rear end portions
- 35: Front end portions

## Claims

1. A dump truck provided with:
a frame (3), an operator's cab (4) arranged on the frame at a front position thereof, and a tiltable body (5) arranged on the frame at a position rearward of the operator's cab,
said body having a payload section defined by a bottom wall, a front wall (8) and a pair of side walls (9) for loading therein an object to be hauled, and a canopy (10) connected to the front wall of the payload section and arranged over the operator's cab, wherein:
a front end portion (15) of a top part (14) of each of the paired side walls (9) included in the payload section of the body is set at a same height position or a substantially same height position as the canopy, **characterized in that**
a rear end portion (18) of the top part (14) of each of the side walls is set at a height position lower than the front end portion in a state where the body is mounted on the frame, and the top part (14) of each of the paired side walls (9) is formed in a configuration including a rearwardly-declining oblique profile,
stiffeners (23; 30) are arranged on outer sides of the respective top parts (14) of the paired side walls (9) so as to extend along and over entire ranges of the respective top parts in a direction of extending arrangement thereof, and reinforce the corresponding side walls,
stiffeners (19) are arranged on outer sides of respective side parts of the canopy (10) so as to reinforce the canopy,
the stiffeners (23; 30) for the respective side walls and the stiffeners (19) arranged on the corresponding sides of the canopy are connected to each other,
the top part (14) of each of the side walls (9) has a horizontal portion (14a) arranged extending in a horizontal direction at a same height position or a substantially same height position as an upper surface of the canopy, and an oblique portion (14b) arranged in conjunction with the horizontal portion and formed in a rearwardly-declining oblique profile in a state where the body is mounted on the frame,
the stiffeners (23; 30) for the respective side walls are connected to the stiffeners (19) arranged on the corresponding sides of the canopy, and are each composed of a horizontal member (24; 31) arranged extending in a horizontal direction along the horizontal portion of the top part of the corresponding side wall and an oblique member (25; 32) connected to the horizontal member and formed in a rearwardly-declining oblique profile along the oblique portion of the top part of the corresponding side wall, and
a position of the conjunction between the horizontal portion (14a) and oblique portion (14b) of each of the side walls (9) and a position of the connection between the horizontal member (24; 31) and oblique member (25; 32) of the stiffener (23; 30) reinforcing the side wall are set at positions forward of a middle position of the payload section as viewed in a front-to-rear direction.

## Patentansprüche

1. Muldenkipper, ausgestattet mit:
einem Rahmen (3), einer Fahrerkabine (4), die auf dem Rahmen an einer Frontposition von diesem angeordnet ist, und ein kippbarer Körper (5), der auf dem Rahmen an einer Position hinter der Fahrerkabine angeordnet ist,
wobei der Körper einen Nutzlastbereich, der durch einen Boden, eine vordere Wand (8) und ein Paar Seitenwände (9) definiert ist, zum Laden eines zu transportierenden Objekts in diesen und eine Abdeckung (10) aufweist, die mit der vorderen Wand des Nutzlastbereichs verbunden ist und über der Fahrerkabine angeordnet ist, wobei:
ein vorderer Endteil (15) eines oberen Teils (14) einer jeden des Paars von Seitenwänden (9), die in dem Nutzlastbereich des Körpers vorhanden sind, auf der gleichen Höhenposition oder einer im Wesentlichen gleichen Höhenposition wie die Abdeckung angeordnet ist, **dadurch gekennzeichnet, dass**
ein hinterer Endteil (18) des oberen Teils (14) einer jeden der Seitenwände an einer Höhenposition angeordnet ist, die in einem Zustand, in dem der Körper auf dem Rahmen montiert ist, tiefer als der vordere Endteil ist, und der obere Teil (14) einer jeden des Paars der Seitenwände (9) in einer Konfiguration ausgebildet ist, die ein schräg nach hinten abfallendes Profil aufweist,
Versteifungen (23; 30) an Außenseiten der entsprechenden oberen Teile (14) des Paars der Seitenwände (9) angeordnet sind, um sich so in einer Richtung ihrer Erstreckungsanordnung entlang und über die gesamten Bereiche der entsprechenden oberen Teile zu erstrecken, und die entsprechenden Seitenwände zu verstärken,
Versteifungen (19) an Außenseiten entsprechender Seitenteile der Abdeckung (10) angeordnet sind, um die Abdeckung zu verstärken,
die Versteifungen (23; 30) für die entsprechenden Seitenwände und die Versteifungen (19), die auf den entsprechenden Seiten der Abdeckung angeordnet sind, miteinander verbunden sind,
der obere Teil (14) der jeweiligen Seitenwand (9) einen waagrechten Teil (14a), der sich in einer waagrechten Richtung auf der gleichen Höhenposition oder auf einer im Wesentlichen gleichen Höhenposition wie eine obere Oberfläche der Abdeckung erstreckt, und einen schrägen Teil (14b) hat, der in Verbindung mit dem waagrechten Teil angeordnet ist und in einem Zustand, in dem der Körper auf dem Rahmen montiert ist, in einem schräg nach hinten abfallenden Profil ausgebildet ist,
die Versteifungen (23; 30) für die entsprechenden Seitenwände mit den Versteifungen (19) verbunden sind, die auf den entsprechenden Seiten der Abdeckung angeordnet sind und jeweils aus einem waagrechten Element (24; 31), das so angeordnet ist, dass es sich in einer waagrechten Richtung entlang dem waagrechten Teil des oberen Teils der entsprechenden Seitenwand erstreckt, und einem schrägen Element (25; 32) besteht, das mit dem waagrechten Element verbunden ist und in einem schräg nach hinten abfallenden Profil entlang dem schrägen Teil des oberen Teils der entsprechenden Seitenwand ausgebildet ist, und
eine Position der Verbindung aus dem waagrechten Teil (14a) und dem schrägen Teil (14b) einer jeden der Seitenwände (9) und eine Position der Verbindung zwischen dem waagrechten Element (24; 31) und dem schrägen Element (25; 32) der Versteifung (23; 30), die die Seitenwand versteift, an Positionen angeordnet sind, die in einer Vor-Rück-Richtung gesehen vor einer Mittelposition des Nutzlastbereichs liegen.

## Revendications

1. Camion-benne prévu avec :
un châssis (3), une cabine (4) d'opérateur agencée sur le châssis dans sa position avant, et une caisse inclinable (5) agencée sur le châssis dans une position vers l'arrière de la cabine de l'opérateur,
ladite caisse ayant une section de chargement définie par une paroi inférieure, une paroi avant (8) et une paire de parois latérales (9) pour y charger un objet à transporter, et une verrière (10) raccordée à la paroi avant de la section de chargement et agencée sur la cabine de l'opérateur, dans lequel :
une partie d'extrémité avant (15) d'une partie supérieure (14) de chacune des parois latérales en paire (9) comprises dans la section de chargement de la caisse, est réglée à la même position de hauteur ou sensiblement la même position de hauteur que la verrière, **caractérisé en ce que** :
une partie d'extrémité arrière (18) de la partie supérieure (14) de chacune des parois latérales est réglée dans une position de hauteur inférieure à la partie d'extrémité avant dans un état dans lequel la caisse est montée sur le châssis et la partie supérieure (14) de chacune des parois latérales en paire (9) est formée dans une configuration comprenant un profil oblique s'inclinant vers l'arrière,
des raidisseurs (23 ; 30) sont agencés sur les côtés externes des parties supérieures (14) respectives des parois latérales en paire (9) afin de s'étendre le long et sur toutes plages des parties supérieures respectives dans la direction d'extension de son agencement, et afin de renforcer les parois latérales correspondantes,
les raidisseurs (19) sont agencés sur les côtés externes des parties latérales respectives de la verrière (10) afin de renforcer la verrière,
les raidisseurs (23 ; 30) pour les parois latérales respectives et les raidisseurs (19) agencés sur les côtés correspondants de la verrière sont raccordés entre eux,
la partie supérieure (14) de chacune des parois latérales (9) a une partie horizontale (14a) agencée en s'étendant dans une même position de hauteur ou sensiblement dans la même position de hauteur qu'une surface supérieure de la verrière, et une partie oblique (14b) agencée conjointement avec la partie horizontale et formée selon un profil oblique incliné vers l'arrière dans un état dans lequel la caisse est montée sur le châssis,
les raidisseurs (23 ; 30) pour les parois latérales respectives sont raccordés aux raidisseurs (19) agencés sur les côtés correspondants de la verrière, et sont chacun composés d'un élément horizontal (24 ; 31) agencé en s'étendant dans une direction horizontale le long de la partie horizontale de la partie supérieure de la paroi latérale correspondante et un élément oblique (25 ; 32) raccordé à l'élément horizontal et formé selon un profil oblique incliné vers l'arrière le long de la partie oblique de la partie supérieure de la paroi latérale correspondante, et
une position de la conjonction entre la partie horizontale (14a) et la partie oblique (14b) de chacune des parois latérales (9) et une position du raccordement entre l'élément horizontal (24 ; 31) et l'élément oblique (25 ; 32) du raidisseur (23 ; 30) renfonçant la paroi latérale sont placés dans des positions vers l'avant d'une position centrale de la section de chargement, comme observé dans une direction avant - arrière.
